# EUROPEAN PATENT SPECIFICATION

(11) **EP 1 571 196 B1**
(45) Date of publication and mention of the grant of the patent: **26.11.2008**
(21) Application number: 05101120.3
(22) Date of filing: 15.02.2005
(51) Int. Cl.: C09K 17/40, C09K 17/02, C09K 17/08, C09K 17/06

(54) **Composition and method for improving the geotechnical characteristics of soils**
Zusammensetzung und Methode zur Verbesserung der geotechnischer Eigenschaften von Böden
Composition et méthode pour améliorer les caractéristiques géotechniques des sols

(30) Priority: 27.02.2004 IT MI20040362
(43) Date of publication of application: 07.09.2005
(73) Proprietor: Ruredil S.p.A., 20122 Milano (IT)
(72) Inventor: MANTEGAZZA, Giovanni, 20064, Gorgonzola (MI) (IT); GATTI, Alessandra, 20097 S. Donato Milanese (MI) (IT)
(74) Representative: Frignoli, Luigi

(56) References cited:
- JP-A- 2001 058 858
- US-A- 4 983 220
- US-A- 6 042 305
- US-B1- 6 379 455
- DATABASE EPODOC EUROPEAN PATENT OFFICE, THE HAGUE, NL; XP002438432 & KR 2001 0085058 A (SIN BO IND CO LTD [KR]) 7 September 2001 (2001-09-07) -& DATABASE WPI Week 200228 Derwent Publications Ltd., London, GB; AN 2002-222871 XP002438436 & KR 2001 0085058 A (SIN BO IND CO LTD) 7 September 2001 (2001-09-07)
- A. EMANUELSEN, S. HANSEN, E. VIGGH: CEMENT AND CONCRETE RESEARCH, vol. 33, no. 10, 2003, pages 1613-1621, XP002437670

## Description

The present invention relates to a composition miscible with the soil to improve its geotechnical characteristics and maintain them unaltered for a prolonged time. The invention also relates to the method of using the composition.

In the civil engineering sector the interaction between the structure to be constructed and the foundation soil on which the structure is to rest is of great importance. In many situations, the foundation soil does not possess the geomechanical characteristics necessary to ensure prolonged load bearing capacity.

One of the most frequent cases is the construction of paved or dirt roads: if the soil is insufficiently stabilized, the base layer of the road cracks and deforms rapidly, resulting in settlement such as to determine serious travel problems.

There are numerous patents relating to methods and/or products for making a soil more compact. Some are based on the use of polymers, others use mixtures consisting of Portland cement, calcium oxide, silicates, aluminates, gypsum and lime: all or some of these constituents may be present. For example FR-A-2753964 cites a mixture of gypsum and lime as the soil stabilizing agent.

From EP-B-1089950 it is also known that a mixture of pozzolan cement, gypsum and calcium oxide (in variable proportions) is able, when suitably integrated with the soil, to improve its geotechnical characteristics.

All these known methods/products are able to stabilize soils, but their effectiveness diminishes in a relatively short time, making it necessary to repeat the consolidation operation: in this respect, after the consolidation treatment, as time passes the soil permeability and its tendency to absorb water increase, consequently the consolidated soil disintegrates, or loses mass.

A freezing-thawing test on compacted material (i.e. on soil compacted with the stabilizing product) is able to provide an indication of the capacity of the soil treated with the stabilizer to maintain its geomechanical characteristics unaltered with time. This test determines the mass loss of a compacted soil after 12 freezing/thawing cycles: the higher the value, the more quickly the stabilized soil will lose its properties (i.e. it will flake and lose mass), and a new operation becomes necessary.

The main object of the present invention is to provide a composition and method enabling effective consolidation operations to be carried out on soils (in particular clay or sandy soils), which maintain the resultant improved geomechanical characteristics for a prolonged time.

This object is attained by a composition consisting of a mixture of discrete oxides comprising between 5% and 35% of SiO₂, between 5% and 70% of Al₂O₃, between 1% and 10% of Fe₂O₃, between 5% and 75% of CaO, between 1% and 15% of MgO, between 1% and 10% of SO₃, between 0.5% and 10% of Na₂O, between 1% and 5% of K₂O, and comprising also between 0.1% and 2% of polypropylene fibres, the percentages being by weight on the mixture weight.

Advantageously, the polypropylene fibres have a length between 3 mm and 19 mm and can be fibrillated (i.e. be in the form of interconnected fibre bundles) or be in the form of monofilaments.

The invention relates to the method for improving the geomechanical characteristics of soils, according to which a composition according to this invention is evenly mixed with the soil in proportions between 2% and 10% by weight on the weight of the soil to be stabilized, preferably in proportions between 3% and 6% by weight.

The soil thickness to be stabilized depends on the design requirements of the foundation soil in relation to the function which it is to perform (foundation for a building structure, foundation for paving, etc.). Consequently the soil thickness involved in the consolidation treatment cannot be established beforehand: practical experience indicates that the minimum soil thickness to be treated is ten centimetres.

To achieve the object of the present invention it is not necessary for all the stated inorganic constituents to be present, however it is preferable that they are.

The nature and characteristics of the present invention will be more apparent from the ensuing description of some embodiments thereof given by way of nonlimiting example.

### EXAMPLE 1

It will be assumed that the geomechanical characteristics of a soil having the characteristics specified in the following Table 1 and Table 2 are to be improved.

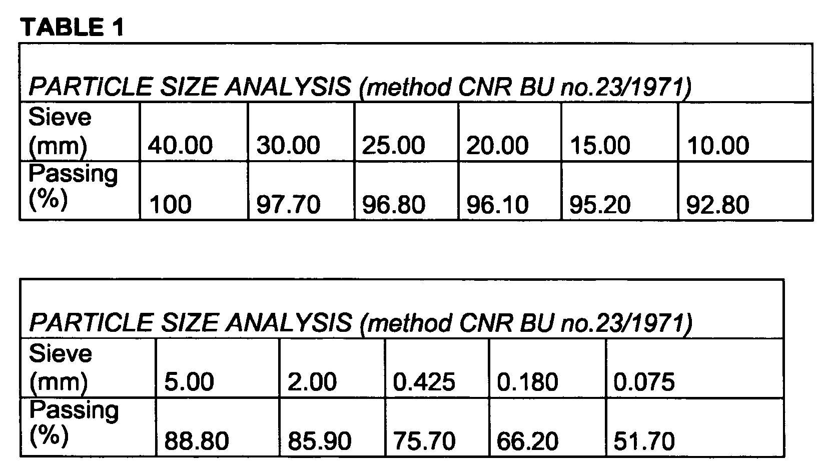

**TABLE 2**

| | |
|---|---|
| Liquid limit (method ASTM D 4318) | 36 |
| Plastic limit (method ASTM D 4318) | 20 |
| Plasticity index (method ASTM D 4318) | 16 |
| Soil classification (method CNR UNI 10006) | A6(5) - Poorly compressible clay |
| Maximum dry density (method AASHTO T180/74) | 2.06 g/cm³ |
| Optimum moisture (method AASHTO T180/74) | 9.0% |
| California bearing ratio CBR (method CNR UNI 10009/64) | 16% |

A portion of 3 kg of said soil is stabilized by mixing it intimately with a composition consisting of a mixture of oxides and polypropylene fibres indicated in Table 3: an equal (weight) portion of the same soil is treated with a stabilizing mixture of known type consisting of lime, pozzolan cement and gypsum (indicated as "mixture A").

Both the stabilizing mixtures are added in a quantity of 4% on the soil weight.

**TABLE 3**

| | |
|---|---|
| SiO₂ | 20.15% |
| Al₂O₃ | 10.05% |
| Fe₂O₃ | 0.25% |
| CaO | 64.25% |
| MgO | 1.5% |
| SO₃ | 3.0% |
| Na₂O | 0.5% |
| Polypropylene fibres, 6mm monofilament | 0.3% |

The California Bearing Ratio, CBR, a method developed in 1929 by the Highways Department, is then determined and the freezing-thawing test on the compacted material is carried out: the values obtained are specified in the following Table 4.

**TABLE 4**

| | **Soil with mixture Tab. 3** | **Soil with mixture A** |
|---|---|---|
| **California bearing ratio CBR** | 171% | 157% |
| **Mass loss of soil sample after 12 freezing/ thawing cycles** | 40.5% | 72.8% |

### EXAMPLE 2

A composition consisting of a mixture of SiO₂ (17%), Al₂O₃ (53%), Fe₂O₃ (3.0%), CaO (15%), MgO (0.25%), SO₃ (6.75%), Na₂O (2.5%), K₂O (1.0%), and fibrillated polypropylene fibres having an average length of 12 mm (the percentages being by weight) is mixed - in a quantity equivalent to 5% by weight on the soil weight - with a soil having the characteristics indicated in the following Table 5.

**TABLE 5**

| | |
|---|---|
| Plasticity index (method ASTM D4318) | 5 |
| Soil classification (method CNR UNI 10006) | A1-b-Muddy gravel and sand |
| Maximum dry density (method AASHTO T180/74) | 2.08 g/cm³ |
| Optimum moisture (method AASHTO T180/74) | 7.0% |

The California bearing ratio CBR of the soil is then determined (method CNR UNI 10009/64) both before and after its treatment with the aforespecified composition.

A California bearing ratio CBR of 135% was thus found for the soil as such (i.e. untreated) and 340% for the soil stabilized with the composition.

### EXAMPLE 3

A mixture formed from SiO₂ (30.5%), Al₂O₃ (8.5%), Fe₂O₃ (4.5%), CaO (50.4%), MgO (3.55%), SO₃ (1.5%), Na₂O (0.1%), K₂O (0.55%), and 3mm monofilament polypropylene fibres (0.4%), the percentages being by weight, is mixed in a quantity of 3% by weight on the soil weight, with a soil having the characteristics indicated in the following Table 6

**TABLE 6**

| | |
|---|---|
| Soil classification | A2-6(1) - Gravel and clayish sand |
| Plasticity index | 14 |
| Maximum dry density | 2.18 g/cm³ |
| Optimum moisture | 7.0% |

The California bearing ratio CBR of the soil is then determined (method CNR UNI 10009/64) both before and after its treatment with the aforestated composition.
A California bearing ratio CBR of 43% was thus found for the soil as such (i.e. untreated) and 294% for the soil stabilized with the composition.

## Claims

1. A composition usable to improve the geomechanical properties of soils, **characterised by** consisting of a mixture of discrete oxides comprising between 5% and 35% of SiO₂, between 5% and 70% of Al₂O₃, between 1% and 10% of Fe₂O₃, between 5% and 75% of CaO, between 1% and 15% of MgO, between 1% and 10% of SO₃, between 0.5% and 10% of Na₂O, between 1% and 5% of K₂O, and comprising also between 0.1% and 2% of polypropylene fibres, the percentages being by weight on the mixture weight.

2. A method for improving the geomechanical properties of soils, **characterised by** evenly mixing a composition according to claim 1 with the soil in proportions between 2% and 10% of the composition on the weight of the soil to be stabilized.

3. A method as claimed in claim 2, **characterised in that** said composition is mixed with the soil in a proportion between 3% and 6% on the weight of the soil to be stabilized.

4. A method as claimed in claim 2 or 3, **characterised in that** the thickness at ground level of the soil treated with a composition according to claim 1 is at least 10 cm.

## Patentansprüche

1. Zusammensetzung, für die Verbesserung der geomechanischen Eigenschaften von Böden, **gekennzeichnet durch** das Bestehen einer Mischung aus einzelnen Oxiden, welche Mischung zwischen 5% und 35% SiO₂, zwischen 5% und 70% Al₂O₃, zwischen 1% und 10% Fe₂O₃, zwischen 5% und 75% CaO, zwischen 1% und 15% MgO, zwischen 1% und 10% SO₃, zwischen 0,5% und 10% Na₂O, zwischen 1 % und 5% K₂O aufweist, und auch zwischen 0,1% und 2% Polypropylen-Fasern, wobei die Prozentanteile nach Gewicht zum Gewicht der Mischung sind, enthält.

2. Verfahren für die Verbesserung der geomechanischen Eigenschaften von Böden, **gekennzeichnet durch** das gleichmäßige Mischen einer Zusammensetzung nach Anspruch 1 mit dem Boden im Anteil von zwischen 2% und 10% der Zusammensetzung zum Gewicht des zu stabilisierenden Bodens.

3. Verfahren nach Anspruch 2, **dadurch gekennzeichnet, dass** die genannte Zusammensetzung mit dem Boden in einem Anteil von zwischen 3% und 6% zum Gewicht des zu stabilisierenden Bodens gemischt wird.

4. Verfahren nach Anspruch 2 oder 3, **dadurch gekennzeichnet, dass** die Dicke am Bodenniveau, welche mit einer Zusammensetzung nach Anspruch 1 behandelt wird, mindestens 10 cm beträgt.

## Revendications

1. Composition utilisable pour améliorer les propriétés géomécaniques des sols, **caractérisée en ce qu'**elle est constituée d'un mélange d'oxydes discrets comprenant entre 5 % et 35 % de SiO₂, entre 5 % et 70 % d'Al₂O₃, entre 1 % et 10 % de Fe₂O₃, entre 5 % et 75 % de CaO, entre 1 % et 15 % de MgO, entre 1 % et 10 % de SO₃, entre 0,5 % et 10 % de Na₂O, entre 1 % et 5 % de K₂O, et comprenant également entre 0,1 % et 2 % de fibres de polypropylène, les pourcentages étant en poids sur la base du poids du mélange.

2. Procédé permettant d'améliorer les propriétés géomécaniques des sols, **caractérisé par** le mélange homogène d'une composition selon la revendication 1 avec le sol en une proportion située entre 2 % et 10 % de la composition sur la base du poids du sol à stabiliser.

3. Procédé selon la revendication 2, **caractérisé en ce que** ladite composition est mélangée avec le sol en une proportion située entre 3 % et 6 % sur la base du poids du sol à stabiliser.

4. Procédé selon la revendication 2 ou 3, **caractérisé en ce que** l'épaisseur, au niveau du sol, du sol traité avec une composition selon la revendication 1 est d'au moins 10 cm.
